Europäisches Patentamt

European Patent Office

Office européen des brevets

(19)

(11) Veröffentlichungsnummer: **0 291 571**
**B1**

## (12) EUROPÄISCHE PATENTSCHRIFT

(45) Veröffentlichungstag der Patentschrift: **16.01.91**

(51) Int. Cl.⁵: **G 01 K 1/14**

(21) Anmeldenummer: **87114405.1**

(22) Anmeldetag: **02.10.87**

(54) Einschraubthermometer.

(30) Priorität: **25.03.87 DE 3709739**

(43) Veröffentlichungstag der Anmeldung:
**23.11.88 Patentblatt 88/47**

(45) Bekanntmachung des Hinweises auf die
Patenterteilung:
**16.01.91 Patentblatt 91/03**

(84) Benannte Vertragsstaaten:
**DE FR GB IT NL SE**

(56) Entgegenhaltungen:
**EP-A-0 142 824**
**EP-A-0 154 960**
**BE-A- 697 776**
**FR-A-1 081 980**
**FR-A-2 257 901**
**GB-A-1 220 842**

(73) Patentinhaber: **Heraeus Sensor GmbH**
**Heraeusstrasse 12-14**
**D-6450 Hanau am Main (DE)**

(72) Erfinder: **Kempf, Kurt**
**Rhönstrasse 5**
**D-6463 Freigericht (DE)**

(74) Vertreter: **Heinen, Gerhard, Dr.**
**Heraeus Holding GmbH Heraeusstrasse 12-14**
**D-6450 Hanau am Main (DE)**

Courier Press, Leamington Spa, England.

**Beschreibung**

Die Erfindung betrifft ein Einschraubthermometer mit einem Einschraubnippel und einem in einem Schutzrohr angeordneten Meßelement, einem mit Längsspalt versehenen Keilring, einer auf den Keilring pressenden Überwurfmutter als Teil einer Halteverschraubung und einem ringförmigen deformierbaren Element.

Aus der DE-OS 33 16 995 ist eine Temperaturerfassungsvorrichtung, die durch eine Öffnung in einen Hohlkörper, wie z.B. Rohrleitung, ragt und die Temperatur eines darin befindlichen flüssigen oder gasförmigen Mediums erfaßt und über eine elektrische Leitung ein der Temperatur entsprechendes Signal zu einer im Außenraum befindlichen Auswerteeinheit leitet. Dabei ist der eigentliche Temperatursensor von einem Kunststoffgehäuse umgeben, wobei der Meßbereich des Sensors durch eine Öffnung dieses Gehäuses in das Medium ragt, während der elektrische Anschlußbereich dicht umschlossen ist. Der in der Wanddurchführung befindliche Teil des Gehäuses ist zwecks Abdichtung von einem O-Ring umgeben.

Eine solche O-Ring-Dichtung ist zwar für drucklose Systeme geeignet, doch erweist sich eine solche Dichtung bei höheren Drücken, wie sie beispielsweise mit 2 bis 10 bar in Heizsystemen auftreten, als so problematisch, so daß Undichtigkeiten zu befürchten sind. Weiterhin ist der Sensor nur mit der kompletten Temperaturerfassungsvorrichtung austauschbar, woraus sich höhere Kosten bei Sensordefekten ergeben.

Aus der GB-PS 1 220 842 ist eine Halterung für ein Thermoelement bekannt, welche mittels einer bajonettartigen Halterung an der zu messenden Vorrichtung befestigt wird. Mittels einer auf Zug beanspruchten Schraubenfeder, deren eines Ende in der bajonettartigen Halterung und deren anderes Ende in einem Nippel gehaltert ist, wird das eingesetzte Thermoelement in Richtung eines Sackloches gepreßt. Der Fühlbereich des Thermoelements ist durch das Sackloch gegenüber dem zu messenden Medium abgeschirmt.

Die FR-PS 1 081 980 beschreibt einen stabförmigen Thermofühler in einem Warmwasserkreislauf (Zentralheizung), wobei der Fühler sich in einem Rohrzwischenstück befindet und von einer Hülse mit seitlichen Ausgängen umschlossen ist, die eine Strömung entlang ihrer Längsachse ermöglicht. Eine mit dem Fühler fest verbundene Anschlagstelle läßt eine beliebige Abplattung des den Sensor umgebenden Dichtringes (O-Ringes) zu, wobei jedoch eine Längenverstellung des Thermofühlers nicht möglich ist. Aufgrund der beliebigen Abplattung des Dichtringes ist eine definierte Pressung nicht möglich.

Aus der FR-OS 2 257 901 ist eine Klemmhalterung für einen Flammenwächter einer Herdflamme bekannt. Es handelt sich hierbei um eine Halterungsfunktion. Aufgabe des Flammenwächters ist es, mit Abfall der Thermospannung das Magnetventil für die Gaszufuhr zu schließen.

Die Erfindung stellt sich die Aufgabe, eine Halteverschraubung für ein auf einfache Weise in drucklosem Zustand austauschbares und arretierbares Temperaturmeßelement zu schaffen, das mit seinem Fühlbereich in ein flüssiges oder gasförmiges Medium ragt und auch bei höheren Drücken, wie sie beispielsweise in Heizanlagen auftreten, ohne irgendwelche Deformationen des Sensors eine ausreichende Dichtung gewährleistet; weiterhin soll die Halterung eine Plombiermöglichkeit aufweisen.

Die Aufgabe wird erfindungsgemäß durch die Merkmale des Anspruchs 1 gelöst.

Als besonders vorteilhaft erweist sich die direkte Messung im Medium, woraus sich eine geringe Wärmeträgheit mit rascher Ansprechzeit bei Temperaturänderungen ergibt. Ferner erweist es sich als vorteilhaft, daß Standard-Schutzrohre für verschiedene Eintauchtiefen des Meßelements einsetzbar sind.

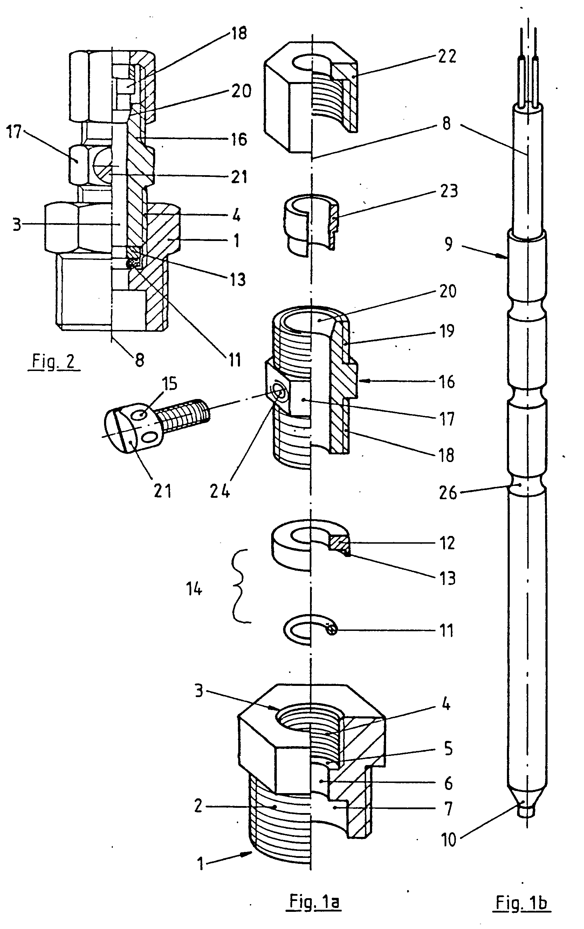

Im folgenden ist der Gegenstand der Erfindung anhand der Figuren 1a, 1b und 2 näher erläutert; dabei zeigt Figur 1a in einer Explosionszeichnung die neuerungsgemäße Halterung, während Figur 1b das zum Einschub geeignete äußere Schutzrohr eines in der Praxis üblichen Temperaturmeßelements zeigt. Figur 2 stellt im Längsschnitt die fertig montierte Halterung dar, wobei zwecks besserer Übersicht auf die Darstellung des Temperaturmeßelements verzichtet wurde.

Gemäß Figur 1a enthält die Halteverschraubung einen Einschraubnippel 1, der an seinem äußeren Ende das zum Einsatz in eine Wanddurchführung erforderliche äußere Gewinde 2 aufweist, während er an seinem anderen Ende einen zylindrischen Hohlraum 3 mit Innengewinde 4 enthält. Der Hohlraum wird durch einen als Dichtfläche für einen elastischen Dichtring ausgebildeten umlaufenden Flansch 5 begrenzt, wobei der Flansch eine zylindrische Öffnung 6 zur Durchführung des in Figur 1b dargestellten Schutzrohres 9 entlang der Achse 8 aufweist. Die Öffnung 6 dient zur Führung des Schutzrohres; sie führt zu einem erweiterten Hohlraum 7, der die das Temperaturmeßelement umgebende Masse verringert.

Oberhalb des Einschraubnippels 1 ist ein O-Ring 11 aus elastischem Material dargestellt, welcher zusammen mit einem Druckring 12 aus Metall ein Dichtelement 14 bildet, das durch einen ebenfalls auf das Schutzrohr 9 aufschiebbaren Doppelnippel 16 gegen die Dichtfläche des umlaufenden Flansches 5 gepreßt wird. Der Druckring 12 ist im Bereich des O-Ringes 11 mit einem umlaufenden Rand 13 versehen, der im verschraubten Zustand auf dem Flansch 5 aufliegt und den O-Ring 11 vollständig umgibt.

Der Doppelnippel 16 weist an seinen beiden Enden jeweils ein Gewinde 18, 19 auf, wobei zwischen beiden Gewinden eine äußere Schlüsselfläche 17 in Form eines Sechskants angeordnet ist. Ein erstes Gewinde 18 ist zum Einschrauben in das Innengewinde 4 des Einschraubnippels 1 vorgesehen, während das am gegenüberliegenden Ende befindliche Gewinde 19 zur Aufnahme einer Überwurfmutter 22 dient, welche zur Anpressung eines einseitig geschlitzten Keilringes 23 gegen die kegelstumpfförmig ausgebildete Innenseite 20 des Doppelnippels 16 vorgesehen ist. Sowohl der Keilring 23 als auch die Überwurfmutter 22 sind zum Aufschieben auf das Schutzrohr 9 vorgesehen. Durch Anziehen der Überwurfmutter 22 wird eine zusätzliche kraftschlüssige Verbindung zwischen dem Schutzrohr und der Innenfläche des Keilringes 23 hergestellt.

Die Schlüsselfläche 17 ist mit einer durchgehenden Bohrung 24 in radialer Richtung versehen, welche ein Innengewinde zur Aufnahme einer Plombierschraube 21 aufweist; die Plombierschraube 21 dient zur Arretierung des Schutzrohres; die Plombierschraube 21 weist in ihrem Kopf eine oder zwei senkrecht zur Schraubenachse verlaufende durchgehende Bohrungen 15 auf, welcher zur Aufnahme eines Plombierdrahtes dienen.

Figur 2 stellt einen Längsschnitt durch die neuerungsgemäße Halterung dar; zwecks besserer Übersicht ist das Schutzrohr hier nicht dargestellt.

In das Gewinde 4 des Einschraubnippels 1 ist der Doppelnippel 16 soweit eingeschraubt, daß der Druckring 12 den elastischen O-Ring 11 auf den ringförmigen Flansch 5 des Einschraubnippels 1 preßt. Aufgrund des auf dem Flansch 5 anliegenden Randes 13 des Druckringes 12 kann sich bei der Pressung der O-Ring 11 nicht in radialer Richtung nach außen dehnen, sondern er wird in Richtung Achse 8 deformiert, so daß er sowohl am hier nicht dargestellten Schutzrohr als auch am Flansch 5 dichtend anliegt.

Zur mechanischen Arretierung des Schutzrohres dient die im Doppelnippel 16 befindliche Plombierschraube 21, welche direkt auf das Schutzrohr preßt; in einer bevorzugten Ausführungsform greift die Plombierschraube 21 in eine umlaufende Rille 26 des Schutzrohres 9 ein, woraus sich eine besonders sichere Arretierung ergibt.

Einschraubnippel, Doppelnippel, Überwurfmutter, Plombierschraube, Druckring sowie Keilring bestehen aus Metall.

Als Material sind für den Einschraubnippel, den Doppelnippel und die Überwurfmutter insbesondere Messing geeignet. Der Druckring und die Plombierschraube bestehen vorzugsweise aus Stahl, während der O-Ring aus gummielastischem Kunststoff besteht.

## Patentanspruch

Einschraubthermometer mit einem Einschraubnippel und einem in einem Schutzrohr angeordneten Meßelement, einem mit Längsspalt versehenen Keilring (23), einer auf den Keilring pressenden Überwurfmutter (22) als Teil einer Halteverschraubung und einem ringförmigen deformierbaren Element (11), dadurch gekennzeichnet, daß bei einem mit seinem Fühlbereich in ein flüssiges oder gasförmiges Medium hineinragenden Meßelement und einem außerhalb dieses Mediums befindlichen Anschlußteil der Einschraubnippel (1) der Halteverschraubung an einem Ende mit einem zylindrischen Hohlraum (3) mit Innengewinde (4) versehen ist, dessen Boden einen als Dichtfläche ausgebildeten umlaufenden Flansch (5) aufweist, daß in den Hohlraum (3) ein aus dem als O-Ring (11) ausgebildeten deformierbaren Element und einem Druckring (12) mit umlaufendem Rand (13) bestehendes, das Schutzrohr umfassendes Dichtelement (14) eingesetzt ist, daß auf die Rückseite des Druckringes (12) ein Doppelnippel (16) durch ein erstes Gewinde (18) aufschraubbar ist, der den O-Ring (11) an den umlaufenden Flansch (5) und auf das Schutzrohr preßt, daß das mit einem zweiten äußeren Gewinde (19) versehene Ende des Doppelnippels (16) auf seiner Innenseite (20) kegelstumpfartig ausgebildet ist und daß in dieses Ende der mit Längsspalt versehene Keilring (23) eingeschoben ist, und daß der Doppelnippel (16) eine Schlüsselfläche (17) aufweist, die mit einer in radialer Richtung verlaufenden, durchgängigen Bohrung (24) versehen ist, in die bis zum Schutzrohr eine Plombierschraube (21) abgesenkt ist.

## Revendication

Thermomètre à visser avec un manchon fileté à visser et un élément de mesure disposé dans un tube de protection, une bague conique (23) dotée d'une fente longitudinale, un écrou-raccord (22) appuyant sur la bague conique constituant une partie d'une monture à vis et un élément annulaire déformable (11), caractérisé en ce que, avec un élément de mesure dont la partie sensible saille dans un fluide liquide ou gazeux et une partie de raccordement se trouvant en dehors de ce fluide, le manchon fileté à visser (1) de la monture à visser porte à l'une de ses extrémités un trou cylindrique (3) avec filetage intérieur (4) dont le fond présente une bride (5) circulaire jouant le rôle de surface d'étanchéité, en ce que l'on insère dans la trou (3) un élément d'étanchéité (14) entourant le tube de protection et composé d'un élément déformable sous la forme d'un joint torique (11) et d'une bague de compression (12) avec bord circulaire (13), en ce que, derrière la bague de compression (12), on visse par son premier filetage (18) un double nipple (16) qui appuie le joint torique (11) contre la bride (5) et le tube de protection, en ce que la seconde extrémité du double nipple (16) portant un second filetage extérieur (19) présente une surface intérieure (20) de forme tronconique et en ce que l'on insère dans cette extrémité la bague conique (23) dotée d'une fente longitudinale, et enfin en ce que le double nipple (16) porte un anneau hexagonal (17) offrant des plats de prise de clef et un trou traversant (24) radial dans lequel une vis de plombage (21) s'insère jusqu'au tube de protection.

## Claim

A screw-in thermometer comprising a screw-in nipple and a measuring element situated within a protective tube, a wedge ring (23) provided with a longitudinal slot, a cap nut (22) pressing on the wedge ring as part of a retaining screw coupling and a deformable annular element (11), characterised in that in the case of a measuring element projecting with its sensor portion into a liquid or gaseous medium and of a connector portion situated outside this medium the screw-in nipple (1) of the retaining screw coupling is provided at one end with a cylindrical cavity (3), having an internal screw thread (4), the bottom of which has a circumferential flange (5) formed as a sealing surface, that a sealing element (14) consisting of the deformable element constructed as an O-ring (11) and of a compression ring (12) having a circumferential rim (13) and embracing the protective tube is inserted into the cavity (3), that a double nipple (16) is screwable on to the rear side of the compression ring (12) by means of a first screw-thread (18) which presses the O-ring (11) against the encircling flange (5) and on to the protective tube, that the end of the double nipple (16) which is provided with a second external screw-thread (19) is frusto-conically formed on its inner side (20) and that the wedge ring (23) provided with a longitudinal slot is pushed into this end and that the double nipple (16) has a key surface (17) provided with a throughbore (24) extending in the radial direction, into which a lead sealing screw (21) is sunk as far as the protective tube.

EP 0 291 571 B1

Fig. 2

Fig. 1a

Fig. 1b

1